(19) Europäisches Patentamt
European Patent Office
Office européen des brevets

(11) EP 3 442 981 B1

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **16723342.8**

(22) Anmeldetag: **12.05.2016**

(51) Int Cl.:
***C07F 7/16*** *(2006.01)*

(86) Internationale Anmeldenummer:
**PCT/EP2016/060701**

(87) Internationale Veröffentlichungsnummer:
**WO 2017/178080 (19.10.2017 Gazette 2017/42)**

(54) **VERFAHREN ZUR ORGANOCHLORSILANHERSTELLUNG IM WIRBELBETTVERFAHREN**

PROCESS FOR ORGANOCHLOROSILANE PRODUCTION IN THE FLUIDIZED BED PROCESS

PROCÉDÉ POUR LA PRÉPARATION D'ORGANOCHLOROSILANES DANS UN PROCÉDÉ À LIT TOURBILLONNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2016 DE 102016206414**

(43) Veröffentlichungstag der Anmeldung:
**20.02.2019 Patentblatt 2019/08**

(73) Patentinhaber: **Wacker Chemie AG**
**81737 München (DE)**

(72) Erfinder:
- **MÜLLER, Michael**
  **84489 Burghausen (DE)**
- **SOFINA, Natalia**
  **84489 Burghausen (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A2- 2 813 285**
**DE-A1- 10 053 346**
**DE-A1- 19 817 775**
**US-A1- 2001 020 108**

- **KUZ'MIN N G ET AL: "STUDY OF HEAT TRANSFER IN A FLUIDIZED BED OF SILICON-COPPER ALLOY IN A MODEL OF AN INDUSTRIAL REACTOR FOR THE SYNTHESIS OF ORGANOCHLOROSILANES", SOVIET CHEMICAL INDUSTRY, MCELROY, AUSTIN, TX, US, Bd. 14, Nr. 5, 1. Januar 1982 (1982-01-01) , Seiten 595-601, XP008182487, ISSN: 0038-5344**
- **PAN ZHANG ET AL: "Effect of Bed Characters on the Direct Synthesis of Dimethyldichlorosilane in Fluidized Bed Reactor", SCIENTIFIC REPORTS, Bd. 5, 6. März 2015 (2015-03-06), Seite 8827, XP055324940, DOI: 10.1038/srep08827**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 442 981 B1

## Beschreibung

Die Erfindung betrifft ein Verfahren zur Herstellung von Organochlorsilanen in einer Wirbelbettreaktion durch Umsetzung von Reaktionsgas, enthaltend Chlormethan mit Kontaktmasse, wobei der hydraulische Durchmesser des Wirbelbettreaktors $\mathbf{d_{hyd}}$, die Gasleerrohrgeschwindigkeit im Wirbelbettreaktor $\mathbf{u_L}$ und der Partikel-Sauterdurchmesser der Kontaktmasse $\mathbf{d_{32}}$ gezielt gewählt werden.

Bei der Müller-Rochow-Direktsynthese wird eine organische Verbindung mit an Kohlenstoff gebundenem Chlor, mit Silicium in Gegenwart von Kupferkatalysatoren und geeigneten Promotoren zu Organochlorsilanen, insbesondere Methylchlorsilanen (MCS), umgesetzt, wobei eine möglichst hohe Produktivität (Menge an gebildeten Silanen pro Zeiteinheit und Reaktionsvolumen), eine möglichst hohe Selektivität - bezogen auf das wichtigste Zielprodukt $(CH_3)_2SiCl_2$ - und auch eine möglichst hohe Siliciumnutzung gefordert werden. Die Organochlorsilane werden großtechnisch über eine Wirbelbettreaktion hergestellt. Bei der MCS-Wirbelbettreaktion handelt es sich um einen sehr komplexen Prozess, an dem sehr viele unterschiedliche Einflussgrößen und Fachgebiete aufeinandertreffen. Im Rahmen der MCS-Synthese werden in DE2704975A Wärmeübertragereinbauten mit dem Ziel beschrieben, die Reaktionswärme der exothermen Reaktion abzuführen, um dadurch eine konstante Reaktionstemperatur zu erreichen.

KUZ'MIN N G ET AL: "STUDY OF HEAT TRANSFER IN A FLUIDIZED BED OF SILICON-COPPER ALLOY IN A MODEL OF AN INDUSTRIAL REACTOR FOR THE SYNTHESIS OF ORGANOCHLOROSILANES", SOVIET CHEMICAL INDUSTRY, MCELROY, AUSTIN, TX, US, Bd. 14, Nr. 5, 1. Januar 1982 (1982-01-01), Seiten 595-601, beschäftigt sich mit dem Einfluss, bzw. der Berechnung von Wärmeübergängen in der Wirbelschicht eines Wirbelbettreaktors. Zusammenhänge zwischen den Geometrien und Ausführungen z.B. der Wärmeübertragereinbauten und der Fluiddynamik, insbesondere der hydraulische Durchmesser des Wirbelbettreaktors $\mathbf{d_{hyd}}$ werden nicht beschrieben.

Gegenstand der Erfindung ist ein Verfahren zur Herstellung von Organochlorsilanen in einer Wirbelbettreaktion durch Umsetzung von Reaktionsgas, enthaltend organische Verbindung mit an Kohlenstoff gebundenem Chlor, mit Kontaktmasse enthaltend Silicium, Kupferkatalysatoren und Promotoren,
bei dem die Wirbelbettreaktion in einem Wirbelbettreaktor durchgeführt wird, wobei
der hydraulische Durchmesser des Wirbelbettreaktors $\mathbf{d_{hyd}}$, die Gasleerrohrgeschwindigkeit im Wirbelbettreaktor $\mathbf{u_L}$ und der Partikel-Sauterdurchmesser der Kontaktmasse $\mathbf{d_{32}}$ derart gewählt werden,
dass in einem kartesischen Koordinatensystem, in welchem **Ar** gegen Re aufgetragen ist, Punkte auf der Fläche gebildet werden, wobei die Fläche begrenzt wird durch die Gleichungen 1 und 2

$$\text{Gleichung 1:} \quad \boldsymbol{Ar = 2 \cdot 10^{-5} \cdot Re^2 + 0{,}08 * Re - 120}$$

$$\text{Gleichung 2:} \quad \boldsymbol{Ar = 2 \cdot 10^{-5} \cdot Re^2 - 1{,}07 * Re + 14100}$$

mit der Untergrenze **Ar** = 0,5 und
der Obergrenze **Ar** = 3000,
wobei **Ar** die dimensionslose Archimedeszahl ist, welche durch Gleichung 3

$$\text{Gleichung 3:} \quad \boldsymbol{Ar = g \cdot \frac{d_{32}^{\,3}}{v_F^{\,2}} \cdot \frac{\rho_P - \rho_F}{\rho_F}}$$

bestimmt wird, wobei

- $\mathbf{g}$ die Erdbeschleunigung [m/s$^2$],
- $\mathbf{d_{32}}$ den Partikel-Sauterdurchmesser [m],,
- $\rho_\mathbf{P}$ die Partikelfeststoffdichte [kg/m$^3$],
- $\rho_\mathbf{F}$ die Fluiddichte [kg/m$^3$],
- $\nu_\mathbf{F}$ die kinematische Viskosität des Fluides [m$^2$/s] bedeuten,

wobei **Re** die dimensionslose Reynoldszahl ist, welche durch Gleichung 4

$$\text{Gleichung 4:} \quad \boldsymbol{Re = \frac{u_L \cdot d_{hyd}}{v_{Fluid}}}$$

bestimmt wird, wobei

$u_L$ die Gasleerrohrgeschwindigkeit im Wirbelbettreaktor [m/s],
$d_{hyd}$ der hydraulische Anlagendurchmesser [m]im Wirbelbettreaktor bedeutet, welcher durch Gleichung 5

$$\text{Gleichung 5:} \qquad d_{hyd} = \frac{4 * A_{q,frei}}{U_{ges,\,benetzt}}$$

bestimmt wird, wobei

$A_{q,frei}$ den freien Strömungsquerschnitt [$m^2$] im Wirbelbettreaktor und
$U_{ges,benetzt}$ den benetzten Umgang [m]jeweils aller Einbauten im Wirbelbettreaktor entspricht,
und wobei der hydraulische Durchmesser des Wirbelbettreaktors $d_{hyd}$ 0,2m bis 1,5m beträgt.

In Figur 1 ist das kartesische Koordinatensystem abgebildet, in welchem **Ar** gegen **Re** aufgetragen ist.

Die Erfindung stellt einen Zusammenhang zwischen konstruktiven Merkmalen (Einbauten), den Korngrößen der eingesetzten Bestandteile der Kontaktmasse und den Betriebsbedingungen im Wirbelbettreaktor her, wodurch sich optimale Bereiche der Organochlor-Synthese bestimmen lassen. Dadurch gelingt die Optimierung von Wirbelbettreaktionen zur Herstellung von Organochlorsilanen.

Der Wirbelbettreaktor (1) wird mit Figur 2 erläutert.
Das Reaktionsgas (2) wird bevorzugt von unten in die Kontaktmasse eingeblasen, wodurch die Partikel der Kontaktmasse fluidisiert werden und die chemische Reaktion zur Herstellung von Organochlorsilanen zwischen der Kontaktmasse und der Gasphase im Bereich des Wirbelbettes (3) stattfindet. Ein Teil der Partikel wird mit der Gasströmung aus dem Wirbelbett (3) in das Freeboard (4) transportiert. Das Freeboard (4) ist durch eine sehr geringe Feststoffdichte gekennzeichnet, wobei diese in Richtung Reaktoraustritt abnimmt. Der Partikelanteil, der mit der Gasströmung den Reaktor verlässt, wird als Partikelaustrag (5) bezeichnet.

In detaillierten Untersuchungen zur Fluiddynamik in Wirbelbettreaktoren mit Wärmeübertragereinbauten wurde herausgefunden, dass diese Einbauten, abhängig von konstruktiven Merkmalen, ebenfalls Einfluss auf die Fluiddynamik des Wirbelbetts und damit auf die Produktivität des Wirbelbettreaktors haben.

Die dabei entdeckten Zusammenhänge wirken zum einen auf die Verweilzeit (1) der reaktiven organischen Verbindung mit an Kohlenstoff gebundenem Chlor, insbesondere Chlormethan, im Wirbelbettreaktor, und zum anderen auf den Austrag von Siliciumpartikeln (2) aus dem Wirbelbettreaktor:

(1) Je höher die Verweilzeit und je homogener die Verteilung des Reaktionsgases im Wirbelbettreaktor, desto mehr organische Verbindung mit an Kohlenstoff gebundenem Chlor wird umgesetzt, d.h., desto produktiver wird der Wirbelbettreaktor. Mit zunehmender Einbautenoberfläche werden die aufsteigenden Gasblasen abgebremst, somit steigt die Gasverweilzeit.

(2) Der Si-Partikelaustrag aus dem Wirbelbettreaktor, der durch das "Mitreißen" der Siliciumpartikel mit dem Gasstrom erfolgt, hängt von der Partikelgröße, der Füllhöhe im Wirbelbettreaktor, von der kontinuierlich zugeführten Reaktionsgas-Menge (Gasgeschwindigkeit), dem Systemdruck sowie von den Reaktoreinbauten ab.

Die Produktivität des Wirbelbettreaktors steigt grundsätzlich mit steigender Füllhöhe an Kontaktmasse, mit höherer Gasgeschwindigkeit und mit dem Einsatz kleinerer Korngrößen der Kontaktmasse (größere Reaktionsoberfläche). Neben dem Einfluss der Einbauten auf die Gasverweilzeit im Wirbelbettreaktor besteht ebenfalls ein Zusammenhang zwischen flächigen Einbauten auf den Austrag an Siliciumpartikeln. Der Austrag wird dabei durch zwei Mechanismen beeinflusst. Zum einen werden die Gasblasen mit zunehmender Einbautenoberfläche abgebremst, so dass an der Wirbelbettoberfläche weniger Siliciumpartikel herausgeschleudert werden. Zum anderen werden vor allem gröbere Siliciumpartikel im Freeboard durch mehr Einbautenoberfläche abgebremst und somit im Wirbelbett gehalten. Durch gezielte Veränderungen von Einbauten kann die Produktivität des Wirbelbettreaktors dann gesteigert werden, indem die Gasgeschwindigkeit und/oder die Füllhöhe an Kontaktmasse erhöht oder die Partikelgröße der Kontaktmassenpartikel gesenkt wird. Der Zusammenhang dieser Größen, die miteinander in Verbindung stehen und sich gegenseitig beeinflussen, kann mittels dimensionsloser Kennzahlen erfasst werden. Auf dieser Grundlage werden Arbeitsbereiche definiert, in denen effektiv und wirtschaftlich Organochlorsilane in Wirbelbettreaktoren hergestellt werden können.

Der Zusammenhang zwischen der Einbautengeometrie, ausgedrückt durch den hydraulischen Anlagendurchmesser des Wirbelbettreaktors, und den beiden Betriebsparametern Gasleerrohrgeschwindigkeit im Wirbelbettreaktor und Partikel-Sauterdurchmesser der Kontaktmasse lässt sich in einem Arbeitsdiagramm gemäß Figur 1 mittels der beiden dimensionslosen Kennzahlen Archimedeszahl und Reynoldszahl darstellen.

Die mit Gleichung 3 bestimmte Archimedeszahl beschreibt den Einfluss des jeweiligen Partikel-Sauterdurchmessers der Kontaktmasse auf die Fluiddynamik in den Wirbelbettreaktoren.

Die mit Gleichung 4 bestimmte Reynoldszahl repräsentiert die Gasleerrohrgeschwindigkeit im Wirbelbettreaktor und damit die Menge an Reaktionsgas und stellt den Zusammenhang zu den Wirbelbettreaktoreinbauten mittels des hydraulischen Anlagendurchmessers im Wirbelbettreaktor als charakteristische Bezugslänge her. Eine konstante Reynoldszahl kann so interpretiert werden, dass die Gasgeschwindigkeit und somit der Volumenstrom an Reaktionsgas bei konstantem, freiem Reaktorquerschnitt erhöht werden kann, wenn dafür der hydraulische Anlagendurchmesser durch mehr Einbautenoberfläche sinkt.

Auf Grundlage der experimentell entdeckten Zusammenhänge lässt sich mit Hilfe dieser beiden dimensionslosen Kennzahlen Archimedeszahl und Reynoldszahl ein Arbeitsbereich definieren, in dem die Organochlorsilane effektiv und produktiv hergestellt werden können.

Dieser Bereich ist gekennzeichnet und abgegrenzt zum einen durch Archimedezahlen zwischen 0,5 und 3000 und zum anderen durch Reynoldszahlen, deren untere Grenze durch die Gleichung 1 bzw. deren obere Grenze durch die Gleichung 2 beschrieben ist.

Dieser Arbeitsbereich kann in einem kartesischen Koordinatensystem dargestellt werden, in welchem **Ar** gegen **Re** aufgetragen ist. Dabei bilden die Gleichungen 1 und 2 und Untergrenzen und Obergrenzen von **Ar** Kurven, die eine Fläche eingrenzen. Die Punkte auf der Fläche bilden den Arbeitsbereich, in welchem die jeweiligen Kombinationen aus Einbautengeometrien, charakterisiert durch den hydraulischen Anlagendurchmesser des Wirbelbettreaktors, Gasleerrohrgeschwindigkeit im Wirbelbettreaktor und den entsprechenden Partikel-Sauterdurchmesser der Kontaktmasse, in denen effektiv und wirtschaftlich Organochlorsilane hergestellt werden können.

Für die Charakterisierung der Partikelgrößen wird der Sauterdurchmesser, d.h. der mittlere, volumengleiche Partikeldurchmesser einer Körnung verwendet.

**Dimensionslose Kennzahlen:**

Die dimensionslose **Archimedeszahl** kann als Verhältnis zwischen Auftriebskraft und Reibungskraft interpretiert werden und dient dazu, das Verhalten von unterschiedlichen Körnungen in Wirbelschichten zu charakterisieren. Dabei entspricht **g** der Erdbeschleunigung [m/s$^2$], $\mathbf{d_{32}}$ dem Partikel-Sauterdurchmesser [m], **pp** der Partikelfeststoffdichte [kg/m$^3$], $\rho_F$ der Fluiddichte [kg/m$^3$] und $\nu_F$ der kinematischen Viskosität des Fluides [m$^2$/s].

$$\text{Gleichung 3:} \qquad Ar = g \cdot \frac{d_{32}{}^3}{v_F{}^2} \cdot \frac{\rho_P - \rho_F}{\rho_F}$$

Mit der dimensionslosen **Reynoldszahl** kann der Strömungszustand eines Fluides beschrieben werden. Die Reynoldszahl kann als Trägheits- zu Zähigkeitskraft interpretiert werden. Als charakteristische Länge, die für die Definition der Reynoldszahl benötigt wird, wird der hydraulische Reaktor- bzw. Anlagendurchmesser verwendet und somit der Bezug zum Einfluss der Reaktoreinbauten hergestellt. Dabei entspricht $\mathbf{u_L}$ der Gasleerrohrgeschwindigkeit im Wirbelbettreaktor [m/s], $\mathbf{d_{hyd}}$ dem hydraulischen Reaktor- bzw. Anlagendurchmesser (Gleichung 5) [m] und $\nu_F$ der kinematischen Viskosität des Fluides [m$^2$/s].

$$\text{Gleichung 4:} \qquad Re = \frac{u_L \cdot d_{hyd}}{v_{Fluid}}$$

Der **hydraulische Anlagendurchmesser im Wirbelbettreaktor [m]** ist eine ingenieurtechnische Kennzahl, mit der sich strömungsmechanische Reibungs- und Oberflächeneffekte von Einbauten, Kanälen oder abweichenden Geometrien beschreiben lassen, indem diese auf einen äquivalenten Rohrdurchmesser zurückgeführt werden (siehe Figur 3). Der hydraulische Durchmesser berechnet sich nach Gleichung 5, wobei $\mathbf{A_{q,frei}}$ den freien Strömungsquerschnitt [m$^2$] und $\mathbf{U_{ges,benetzt}}$ den benetzten Umgang jeweils aller Einbauten im Wirbelbettreaktor entspricht [m].

$$\text{Gleichung 5:} \qquad d_{hyd} = \frac{4 * A_{q,frei}}{U_{ges,\,benetzt}}$$

Gegenstand der Erfindung ist auch ein Verfahren zur Auswahl von Reaktionsparametern für die Herstellung von Organochlorsilanen in einer Wirbelbettreaktion durch Umsetzung von organischer Verbindung mit an Kohlenstoff gebundenem Chlor mit Kontaktmasse, enthaltend Silicium, Kupferkatalysatoren und Promotoren,

bei dem die Wirbelbettreaktion in einem Wirbelbettreaktor durchgeführt wird, wobei
der hydraulische Durchmesser des Wirbelbettreaktors $\mathbf{d_{hyd}}$,
die Gasleerrohrgeschwindigkeit im Wirbelbettreaktor $\mathbf{u_L}$ und
der Partikel-Sauterdurchmesser der Kontaktmasse $\mathbf{d_{32}}$
wie vorstehend beschrieben gewählt werden.

Vorzugsweise beträgt die Gasleerrohrgeschwindigkeit im Wirbelbettreaktor $\mathbf{u_L}$ 0,02m/s bis 0,4m/s, besonders bevorzugt 0,05m/s bis 0,36m/s, insbesondere 0,08m/s bis 0,32m/s.

Vorzugsweise beträgt der Partikel-Sauterdurchmesser der Kontaktmasse $\mathbf{d_{32}}$ 5$\mu$m bis 300$\mu$m, besonders bevorzugt 10$\mu$m bis 280$\mu$m, insbesondere 15$\mu$m bis 250$\mu$m.

Die Kontaktmasse ist ein Gemisch aus festen Partikeln, das Silicium, Kupferkatalysatoren und Promotoren enthält.

Das im Verfahren eingesetzte Silicium enthält vorzugsweise höchstens 5 Gew-%, besonders bevorzugt höchstens 2 Gew-%, insbesondere höchstens 1 Gew-% andere Elemente als Verunreinigungen. Die Verunreinigungen, welche mindestens 0,01 Gew-% ausmachen, sind vorzugsweise Elemente, ausgewählt aus Fe, Al, Ca, Ni, Mn, Cu, Zn, Sn, C, V, Ti, Cr, B, P, O.

Das Kupfer für den Katalysator kann ausgewählt werden aus metallischem Kupfer, Kupferlegierungen oder Kupferverbindungen. Die Kupferverbindungen werden bevorzugt ausgewählt aus Kupferoxiden und Kupferchloriden, insbesondere CuO, $Cu_2O$ und CuCl, und einer Kupfer-Phosphor-Verbindung (CuP-Legierung). Kupferoxid kann beispielsweise Kupfer in Form von Kupferoxid-Gemischen und in Form von Kupfer(II)oxid sein. Kupferchlorid kann in Form von CuCl oder in Form von $CuCl_2$ eingesetzt werden, wobei auch entsprechende Mischungen möglich sind. In einer bevorzugten Ausführungsform wird das Kupfer als CuCl eingesetzt.

Vorzugsweise werden auf 100 Gewichtsteile Silicium mindestens 0,1 Gewichtsteile, besonders bevorzugt mindestens 1 Gewichtsteil Kupferkatalysator und vorzugsweise höchstens 10 Gewichtsteile, insbesondere höchstens 8 Gewichtsteile Kupferkatalysator, jeweils bezogen auf metallisches Kupfer, eingesetzt.

Vorzugsweise enthält die Kontaktmasse einen oder mehrere Zinkpromotoren, die vorzugsweise aus Zink und Zinkchlorid ausgewählt werden. Vorzugsweise werden auf 100 Gewichtsteile Silicium mindestens 0,01 Gewichtsteile Zinkpromotor, besonders bevorzugt mindestens 0,05 Gewichtsteile Zinkpromotor und vorzugsweise höchstens 1 Gewichtsteile, insbesondere höchstens 0,5 Gewichtsteile Zinkpromotor, jeweils bezogen auf metallisches Zink, eingesetzt.

Vorzugsweise enthält die Kontaktmasse einen oder mehrere Zinnpromotoren, die vorzugsweise aus Zinn und Zinnchlorid ausgewählt werden. Vorzugsweise werden auf 100 Gewichtsteile Silicium mindestens 0,001 Gewichtsteile Zinnpromotor, besonders bevorzugt mindestens 0,002 Gewichtsteile Zinnpromotor und vorzugsweise höchstens 0,2 Gewichtsteile, insbesondere höchstens 0,1 Gewichtsteile Zinnpromotor, jeweils bezogen auf metallisches Zinn, eingesetzt.

Vorzugsweise enthält die Kontaktmasse eine Kombination aus Zinkpromotoren und Zinnpromotoren und insbesondere zusätzlich Phosphorpromotoren.

Neben den Zink- und/oder Zinnpromotoren können auch noch weitere Promotoren eingesetzt werden, die vorzugsweise ausgewählt werden aus den Elementen Phosphor, Cäsium, Barium, Mangan, Eisen und Antimon und deren Verbindungen.

Der P-Promotor wird vorzugsweise aus CuP-Legierungen ausgewählt.

Der Druck im Wirbelbettreaktor beträgt vorzugsweise mindestens 1 bar, insbesondere mindestens 1,5 bar und vorzugsweise höchstens 5 bar, insbesondere höchstens 3 bar, jeweils als absoluter Druck angegeben.

Die organische Verbindung mit an Kohlenstoff gebundenem Chlor ist vorzugsweise ein Chlor-C1-C6-Alkan, insbesondere Chlormethan.

Die hergestellten Organochlorsilane sind vorzugsweise C1-C6-Alkylchlorsilane, insbesondere Methylchlorsilane. Die hergestellten Methylchlorsilane werden vorzugsweise ausgewählt aus Dimethyldichlorsilan, Methyltrichlorsilan, Trimethylchlorsilan, Dimethylchlorsilan und Methyldichlorsilan. Insbesondere bevorzugt ist Dimethyldichlorsilan.

Vorzugsweise werden der hydraulische Durchmesser des Wirbelbettreaktors $\mathbf{d_{hyd}}$, die Gasleerrohrgeschwindigkeit im Wirbelbettreaktor $\mathbf{u_L}$ und der Partikel-Sauterdurchmesser der Kontaktmasse $\mathbf{d_{32}}$ derart gewählt, dass bei der Wirbelbettreaktion eine hohe Produktivität und/oder Selektivität für die hergestellten Organochlorsilane erreicht wird. Vorzugsweise werden diese so gewählt, dass eine hohe Produktivität und/oder Selektivität für Dimethyldichlorsilan erreicht wird.

Das Reaktionsgas kann neben Chlormethan ein Trägergas enthalten, das ausgewählt wird aus $N_2$ und Edelgasen wie Ar. Vorzugsweise enthält das Reaktionsgas mindestens 50 Vol.-%, besonders bevorzugt mindestens 70 Vol.-%, insbesondere mindestens 90 Vol.-% Chlormethan.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

**Beispiele:**

Der oben beschriebene Zusammenhang zwischen Einbauten, Körnungen und Partikelaustrag wurde zunächst ohne chemische Reaktion in einem Technikumswirbelbett nachgewiesen. Dabei hatte sich gezeigt, dass ein exponentieller Zusammenhang zwischen dem hydraulischen Reaktor- bzw. Anlagendurchmesser und dem Partikelaustrag besteht. Dieser Zusammenhang wurde für unterschiedliche Einbauten und Partikelgrößenverteilungen gemessen und bestätigt.

**Allgemeine Beispiele:**

Erhöhung der Wirbelbett-Reaktorproduktivität bei gleichbleibender Kontaktmassenkörnung an bestehenden Reaktoren: Durch Absenkung des hydraulischen Anlagendurchmessers (durch zusätzliche flächige Einbauten bzw. Wärmetauscherrohre) wird der Partikelaustrag aus dem Reaktor zunächst reduziert. Der zusätzliche Spielraum im Partikelaustrag kann durch die Erhöhung der Gasgeschwindigkeit genutzt werden, wodurch die Produktivität im gekennzeichneten Bereich steigt.
Erhöhung der Reaktorproduktivität durch Reduzierung der Kontaktmassenkorngrößen bei bestehenden Reaktoren: Eine geringere Korngröße hat einen höheren Partikelaustrag aus dem Reaktor zur Folge. Dieser kann wiederum durch Reduzierung des hydraulischen Anlagendurchmessers gesenkt werden, so dass eine produktivere Körnung mit größerer Oberfläche eingesetzt werden kann bzw. um die Silicium-Verluste zu reduzieren.

Auslegung neuer Wirbelbettreaktoren: Unter Beachtung der oben genannten Erkenntnisse können neue Synthesereaktoren optimal bzgl. der Dimensionierung, der Einbauten und der Betriebseinstellungen an eine (optimale) Kontaktmassenkörnung angepasst werden. Diese Kombinationen entsprechen der gekennzeichneten Fläche in der Figur 1.

Experimente: Um die gewonnen Erkenntnisse und Zusammenhänge auf die Produktivität der MCS-Synthese übertragen zu können und um die oben genannten Grenzen der Einflussgrößen zu definieren, wurden eingehende Untersuchungen an unterschiedlichen kontinuierlich betriebenen Wirbelbettreaktoren und Reaktorgrößen durchgeführt. Durch die Variation des hydraulischen Anlagendurchmessers $d_{hyd}$ zwischen 0,1m und 1,0m, der Gasleerrohrgeschwindigkeit $u_L$ zwischen 0,03m/s und 0,3m/s, sowie des Partikel-Sauterdurchmessers zwischen 15$\mu$m und 250$\mu$m wurden dabei die in Tabelle 1 dargestellten Versuchsresultate mit den entsprechenden Reynolds- und Archimedeszahlen erzielt. Als Maß für die Produktivität zur Eingrenzung der ausgewählten Kombinationen aus Reynolds- und Archimedeszahlen wurde dazu die produzierte Dichlordimethylsilanmenge je Stunde [kg/h], bezogen auf den Kontaktmassenreaktorinhalt [kg], zu Grunde gelegt [kg/(kg*h)], welche 0,15kg/(kg*h) überschreitet. Die Ergebnisse dieser Untersuchungen, zusammengefasst in Figur 4, zeigen die graphische Einordung Messergebnisse. Dargestellt sind zum einen die Messungen innerhalb des definierten Bereiches (Quadrate, V4-V10 & V12), deren Produktivität größer als 0,15kg/(kg*h) ist, wogegen die als Raute dargestellten Messergebnisse (V1-3, V11 & V13) geringere Produktivitäten, d.h. kleiner 0,15kg/(kg*h)aufweisen.

Tabelle 1

| | Reynolds | Archimedes | Produktivität [kg/(kg*h)] |
|---|---|---|---|
| **V1*** | 136 | 0,3 | 0,025 |
| **V2*** | 420 | 5,5 | 0,027 |
| **V3*** | 738 | 628,0 | 0,006 |
| **V4** | 3,758 | 0,9 | 0,310 |
| **V5** | 4,698 | 0,9 | 0,374 |
| **V6** | 5,399 | 198,9 | 0,217 |
| **V7** | 11,609 | 1.966,1 | 0,226 |
| **V8** | 19, 928 | 25,2 | 0,282 |
| **V9** | 22,628 | 24,0 | 0,278 |
| **V10** | 26,201 | 278,9 | 0,189 |
| **V11*** | 30,964 | 24,0 | 0,110 |
| **V12** | 31,073 | 278,9 | 0,165 |
| **V13*** | 33,346 | 278,9 | 0,099 |

*nicht erfindungsgemäß

Die Bereichsgrenze für niedrige Reynoldszahlen (Gleichung 1) ist dadurch gekennzeichnet, dass Kombinationen aus geringer Gasgeschwindigkeit und/oder sehr geringem hydraulischen Reaktordurchmesser zu abnehmenden Produktionsmengen führen. Dieser Einfluss steigt mit zunehmender Korngröße (Archimedeszahl), da für gröbere Körnungen vergleichsweise höhere Gasgeschwindigkeiten für die Fluidisierung benötigt werden, was aus dem Kurvenverlauf (Gleichung 1, Figur 1) zu erkennen ist. Die Bereichsgrenze für hohe Reynoldszahlen (Gleichung 2) ist durch sehr hohe Gasgeschwindigkeiten gekennzeichnet, so dass beispielsweise der Partikelaustrag nicht mehr durch Anpassung des hydraulischen Reaktordurchmessers kompensiert werden kann. Auch hier ist zu erkennen, dass für gröbere Partikel (höhere Archimedeszahl) ein vergleichsweise weiter Bereich angegeben werden kann, da sich beispielsweise der Partikelaustrag erst bei Kombinationen von höherer Gasgeschwindigkeit und hydraulischem Anlagendurchmesser negativ auf die Produktivität auswirkt. Die Abgrenzung des definierten Bereiches (Figur 4) bzgl. der Archimedeszahlen <0,5, d.h. für sehr feine Körnungen, resultiert zum einen daraus, dass der Partikelaustrag durch Reduktion des hydraulischen Anlagendurchmessers nicht mehr ausreichend kompensiert werden kann, was einen unwirtschaftlichen Anlagenbetrieb zur Folge hat, und zum anderen daraus, dass in diesem Bereich die Grenzen einer effektiven Fluidisierbarkeit der Kontaktmasse erreicht werden, so dass aufgrund von verringertem Gas-/Feststoffkontakt die Produktivität sinkt. Am oberen Ende des Bereiches der Archimedeszahlen (>3000) handelt es sich um gröbere Körnungen, welche zum einen vergleichsweise hohe Fluidisierungsgeschwindigkeiten benötigen und zum anderen aufgrund der geringeren spezifischen Partikeloberfläche den wirtschaftlichen Bereich hoher Produktivität verlassen.

**Patentansprüche**

**1.** Verfahren zur Herstellung von Organochlorsilanen in einer Wirbelbettreaktion durch Umsetzung von Reaktionsgas, enthaltend organische Verbindung mit an Kohlenstoff gebundenem Chlor, mit Kontaktmasse enthaltend silicium, Kupferkatalysatoren und Promotoren,
bei dem die Wirbelbettreaktion in einem Wirbelbettreaktor durchgeführt wird, wobei
der hydraulische Durchmesser des Wirbelbettreaktors $\mathbf{d_{hyd}}$, die Gasleerrohrgeschwindigkeit im Wirbelbettreaktor $\mathbf{u_L}$ und
der Partikel-Sauterdurchmesser der Kontaktmasse $\mathbf{d_{32}}$ derart gewählt werden,
dass in einem kartesischen Koordinatensystem, in welchem **Ar** gegen **Re** aufgetragen ist, Punkte auf der Fläche gebildet werden, wobei die Fläche begrenzt wird durch die Gleichungen 1 und 2

$$\text{Gleichung 1:} \quad Ar = 2 \cdot 10^{-5} \cdot Re^2 + 0,08 * Re - 120$$

$$\text{Gleichung 2:} \quad Ar = 2 \cdot 10^{-5} \cdot Re^2 - 1,07 * Re + 14100$$

mit der Untergrenze **Ar** = 0,5 und
der Obergrenze **Ar =** 3000,
wobei **Ar** die dimensionslose Archimedeszahl ist, welche durch Gleichung 3

$$\text{Gleichung 3:} \quad Ar = g \cdot \frac{d_{32}^{3}}{v_F^{2}} \cdot \frac{\rho_P - \rho_F}{\rho_F}$$

bestimmt wird, wobei

**g** die Erdbeschleunigung [m/s$^2$],,
$\mathbf{d_{32}}$ den Partikel-Sauterdurchmesser [m],,
$\rho_P$ die Partikelfeststoffdichte [kg/m$^3$],
$\rho_F$ die Fluiddichte [kg/m$^3$],
$\nu_F$ die kinematische Viskosität des Fluides [m$^2$/s] bedeuten, wobei **Re** die dimensionslose Reynoldszahl ist, welche durch Gleichung 4

$$\text{Gleichung 4:} \quad Re = \frac{u_L \cdot d_{hyd}}{\nu_F}$$

bestimmt wird, wobei

**$u_L$** die Gasleerrohrgeschwindigkeit im Wirbelbettreaktor [m/s],
**$d_{hyd}$** der hydraulische Anlagendurchmesser [m] im Wirbelbettreaktor bedeutet, welcher durch Gleichung 5

$$\text{Gleichung 5:} \quad d_{hyd} = \frac{4 * A_{q,frei}}{U_{ges,benetzt}}$$

bestimmt wird, wobei

**$A_{q,frei}$** den freien Strömungsquerschnitt [$m^2$] im Wirbelbettreaktor und
**$u_{ges,benetzt}$** den benetzten Umgang [m]jeweils aller Einbauten im Wirbelbettreaktor entspricht, und wobei der hydraulische Durchmesser des Wirbelbettreaktors **$d_{hyd}$** 0,2m bis 1,5m beträgt.

2. Verfahren zur Auswahl von Reaktionsparametern für die Herstellung von Organochlorsilanen in einer Wirbelbettreaktion durch Umsetzung von organischer Verbindung mit an Kohlenstoff gebundenem Chlor mit Kontaktmasse, enthaltend Silicium, Kupferkatalysatoren und Promotoren,
bei dem die Wirbelbettroaktion in einem Wirbelbettreaktor durchgeführt wird, wobei
der hydraulische Durchmesser des Wirbelbettreaktors $d_{hyd}$, die Gasleerrohrgeschwindigkeit im Wirbelbettreaktor $u_L$ und
der Partikel-Sauterdurchmesser der Kontaktmasse $d_{32}$ wie in Anspruch 1 gewählt werden.

3. Verfahren nach einem oder mehreren der vorangehenden Ansprüche, bei dem die Gasleerrohrgeschwindigkeit im Wirbelbettreaktor $u_L$ 0,02m/s bis 0,4m/s beträgt.

4. Verfahren nach einem oder mehreren der vorangehenden Ansprüche, bei dem der Partikel-Sauterdurchmesser der Kontaktmasse **$d_{32}$** 5µm bis 300µm beträgt.

5. Verfahren nach einem oder mehreren der vorangehenden Ansprüche, bei dem die Partikelgröße des Siliciums 0,5 bis 650 Mikrometer beträgt.

6. Verfahren nach einem oder mehreren der vorangehenden Ansprüche, bei dem das Reaktionsgas mindestens 50 Vol.-% organische Verbindung mit an Kohlenstoff gebundenem Chlor enthält.

7. Verfahren nach einem oder mehreren der vorangehenden Ansprüche, bei dem die organische Verbindung mit an Kohlenstoff gebundenem Chlor Chlormethan ist und die hergestellten Organochlorsilane Methylchlorsilane sind.

## Claims

1. Process for producing organochlorosilanes in a fluidized bed reaction by reacting reaction gas, comprising organic compound having chlorine bound to carbon, with catalytic composition comprising silicon, copper catalysts and promoters,
in which the fluidized bed reaction is carried out in a fluidized bed reactor, wherein
the hydraulic diameter of the fluidized bed reactor **$d_{hyd}$**,
the superficial gas velocity in the fluidized bed reactor **$u_L$** and
the particle Sauter diameter of the catalytic composition **$d_{32}$**
are selected such that,
in a Cartesian coordination system, in which **Ar** is plotted against **Re,** points on the surface are formed wherein the surface is limited by equations 1 and 2

$$\text{Equation 1:} \quad Ar = 2 \cdot 10^{-5} \cdot Re^2 + 0.08 * Re - 120$$

$$\text{Equation 2:} \quad Ar = 2 \cdot 10^{-5} \cdot Re^2 - 1.07 * Re + 14100$$

wherein the lower limit **Ar** = 0.5 and
the upper limit **Ar** = 3000,
where **Ar** is the dimensionless Archimedes number, which is determined by equation 3

$$\text{Equation 3:} \quad \boldsymbol{Ar = g \cdot \frac{d_{32}^{3}}{v_F^{2}} \cdot \frac{\rho_P - \rho_F}{\rho_F}}$$

where

**g** is the acceleration due to gravity [m/s$^2$],
$\mathbf{d_{32}}$ is the particle Sauter diameter [m],
**pp** is the particle solid density [kg/m$^3$],
$\rho_F$ is the fluid density [kg/m$^3$],
$\nu_F$ is the kinematic viscosity of the fluid [m$^2$/s], where **Re** is the dimensionless Reynolds number, which is determined by equation 4

$$\text{Equation 4:} \quad \boldsymbol{Re = \frac{u_L \cdot d_{hyd}}{v_F}}$$

where

$\mathbf{u_L}$ is the superficial gas velocity in the fluidized bed reactor [m/s],
$\mathbf{d_{hyd}}$ is the hydraulic plant diameter [m] in the fluidized bed reactor, which is determined by equation 5

$$\text{Equation 5:} \quad \boldsymbol{d_{hyd} = \frac{4 * A_{q,free}}{U_{ges,wet}}}$$

where

$\mathbf{A_{q,free}}$ is the free cross-sectional flow [m$^2$] in the fluidized bed reactor and
$\mathbf{U_{ges,wet}}$ corresponds to the wet circumference [m] in each case of all internals in the fluidized bed reactor, and wherein the hydraulic diameter of the fluidized bed reactor $\mathbf{d_{hyd}}$ is from 0.2 m to 1.5 m.

**2.** Process for selecting reaction parameters for producing organochlorosilanes in a fluidized bed reaction by reacting organic compound having chlorine bound to carbon with catalytic composition comprising silicon, copper catalysts and promoters,
in which the fluidized bed reaction is carried out in a fluidized bed reactor, wherein
the hydraulic diameter of the fluidized bed reactor $\mathbf{d_{hyd}}$,
the superficial gas velocity in the fluidized bed reactor $\mathbf{u_L}$ and
the particle Sauter diameter of the catalytic composition $\mathbf{d_{32}}$
are selected as in Claim 1.

**3.** Process according to one or more of the preceding claims, in which the superficial gas velocity in the fluidized bed reactor $\mathbf{u_L}$ is 0.02 m/s to 0.4 m/s.

**4.** Process according to one or more of the preceding claims, in which the particle Sauter diameter of the catalytic composition $\mathbf{d_{32}}$ is 5 $\mu$m to 300 $\mu$m.

**5.** Process according to one or more of the preceding claims, in which the silicon particle size is 0.5 to 650 micrometers.

**6.** Process according to one or more of the preceding claims, in which the reaction gas comprises at least 50% by volume of organic compound having chlorine bound to carbon.

**7.** Process according to one or more of the preceding claims, in which the organic compound having chlorine bound to carbon is chloromethane and the organochlorosilanes produced are methylchlorosilanes.

## Revendications

1. Procédé pour la préparation d'organochlorosilanes dans un réacteur à lit tourbillonnant par transformation d'un gaz de réaction, contenant un composé organique présentant du chlore lié au carbone, avec une masse de contact contenant du silicium, des catalyseurs à base de cuivre et des promoteurs, dans lequel la réaction en lit tourbillonnant est réalisée dans un réacteur à lit tourbillonnant, le diamètre hydraulique du réacteur à lit tourbillonnant $d_{hyd}$, la vitesse du gaz en tube vide dans le réacteur à lit tourbillonnant $u_L$ et le diamètre de Sauter des particules de la masse de contact $d_{32}$ étant choisis de manière telle que dans un système cartésien de coordonnées, dans lequel Ar est reporté par rapport à Re, des points sont formés sur la surface, la surface étant limitée par les équations 1 et 2

équation 1 :

$$Ar = 2 \cdot 10^{-5} \cdot Re^2 + 0.08 * Re - 120$$

équation 2 :

$$Ar = 2 \cdot 10^{-5} \cdot Re^2 - 1.07 * Re + 14100$$

avec la limite inférieure de Ar = 0,5 et la limite supérieure de Ar = 3000, Ar étant le nombre d'Archimède sans dimension, qui est déterminé par l'équation 3

équation 3 :

$$Ar = g \cdot \frac{d_{32}^{\;3}}{v_F^{\;2}} \cdot \frac{\rho_P - \rho_F}{\rho_F}$$

où

g signifie l'accélération de la pesanteur [$m/s^2$],
$d_{32}$ signifie de diamètre de Sauter des particules [m]
$\rho_P$ signifie la masse volumique des particules [$kg/m^3$],
$\rho_F$ signifie la densité du fluide [$kg/m^3$],
$\nu_F$ signifie la viscosité cinématique du fluide [$m^2/s$],

Re étant le nombre de Reynolds sans dimension, qui est déterminé par l'équation 4

équation 4 :

$$Re = \frac{u_L \cdot d_{hyd}}{v_F}$$

où

$u_L$ signifie la vitesse du gaz en tube vide dans le réacteur à lit tourbillonnant [m/s],
$d_{hyd}$ signifie le diamètre hydraulique de l'installation [m] dans le réacteur à lit tourbillonnant, qui est déterminé par l'équation 5

équation 5 :

$$d_{hyd} = \frac{4 * A_{s,libre}}{U_{tot,mouillé}}$$

où

$A_{s,libre}$ signifie la section d'écoulement libre [$m^2$] dans le réacteur à lit tourbillonnant et
$U_{tot,mouillé}$ signifie le pourtour mouillé [m] de respectivement tous les encastrements dans le réacteur à lit tourbillonnant,

et le diamètre hydraulique du réacteur à lit tourbillonnant $d_{hyd}$ valant 0,2 m à 1,5 m.

**2.** Procédé pour la sélection de paramètres de réaction pour la préparation d'organochlorosilanes dans un réacteur à lit tourbillonnant par transformation d'un composé organique présentant du chlore lié au carbone, avec une masse de contact, contenant du silicium, des catalyseurs à base de cuivre et des promoteurs, dans lequel la réaction en lit tourbillonnant est réalisée dans un réacteur à lit tourbillonnant, le diamètre hydraulique du réacteur à lit tourbillonnant $d_{hyd}$, la vitesse du gaz en tube vide dans le réacteur à lit tourbillonnant $u_L$ et le diamètre de Sauter des particules de la masse de contact $d_{32}$ étant choisis comme dans la revendication 1.

**3.** Procédé selon l'une ou plusieurs des revendications précédentes, dans lequel la vitesse du gaz en tube vide dans le réacteur à lit tourbillonnant $u_L$ est de 0,02 m/s à 0,4 m/s.

**4.** Procédé selon l'une ou plusieurs des revendications précédentes, dans lequel le diamètre de Sauter des particules de la masse de contact $d_{32}$ est de 5 $\mu$m à 300 $\mu$m.

**5.** Procédé selon l'une ou plusieurs des revendications précédentes, dans lequel la grosseur de particule du silicium est de 0,5 $\mu$m à 650 $\mu$m.

**6.** Procédé selon l'une ou plusieurs des revendications précédentes, dans lequel le gaz de réaction contient au moins 50% en volume de composé organique présentant du chlore lié au carbone.

**7.** Procédé selon l'une ou plusieurs des revendications précédentes, dans lequel le composé organique présentant du chlore lié au carbone est le chlorométhane et les organochlorosilanes préparés sont des méthylchlorosilanes.

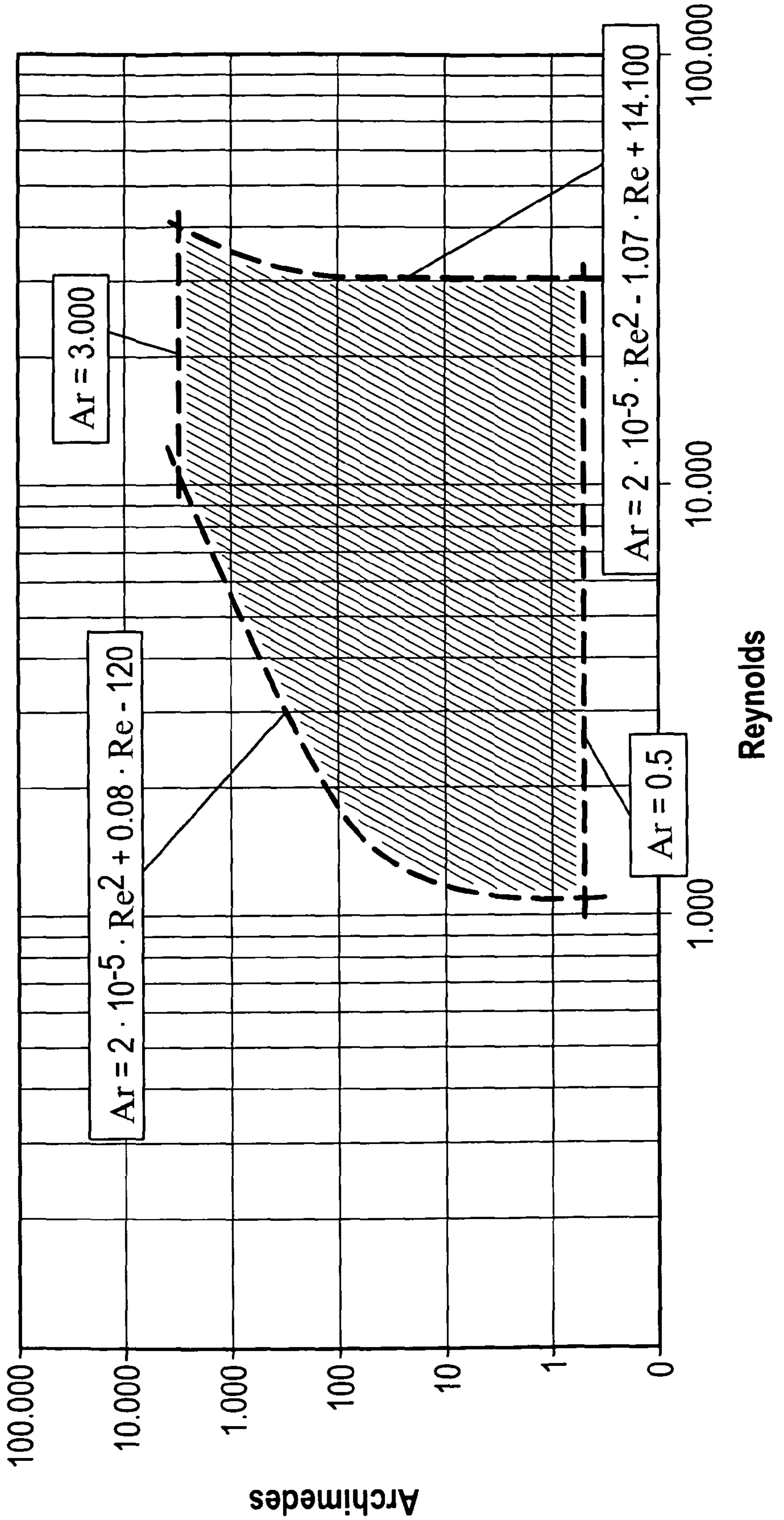

Ar = 3.000
Ar = 2 · 10-5 · Re2 + 0.08 · Re - 120
Ar = 2 · 10-5 · Re2 - 1.07 · Re + 14.100
Ar = 0.5
100.000
10.000
1.000
100
10
1
0
Archimedes
Reynolds


Fig. 1

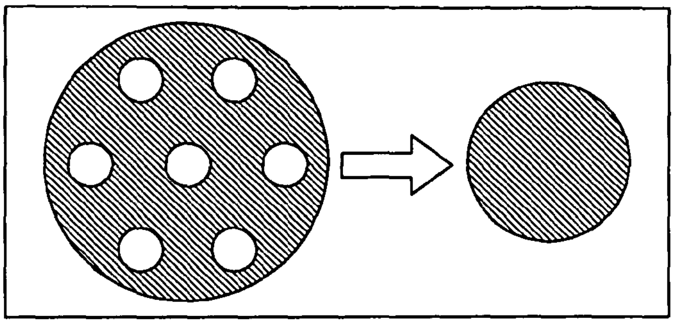

Fig. 3

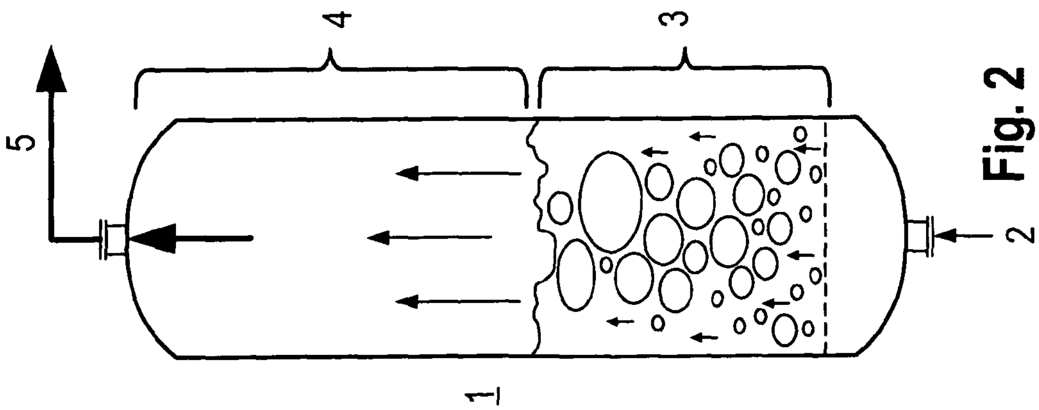


Fig. 2

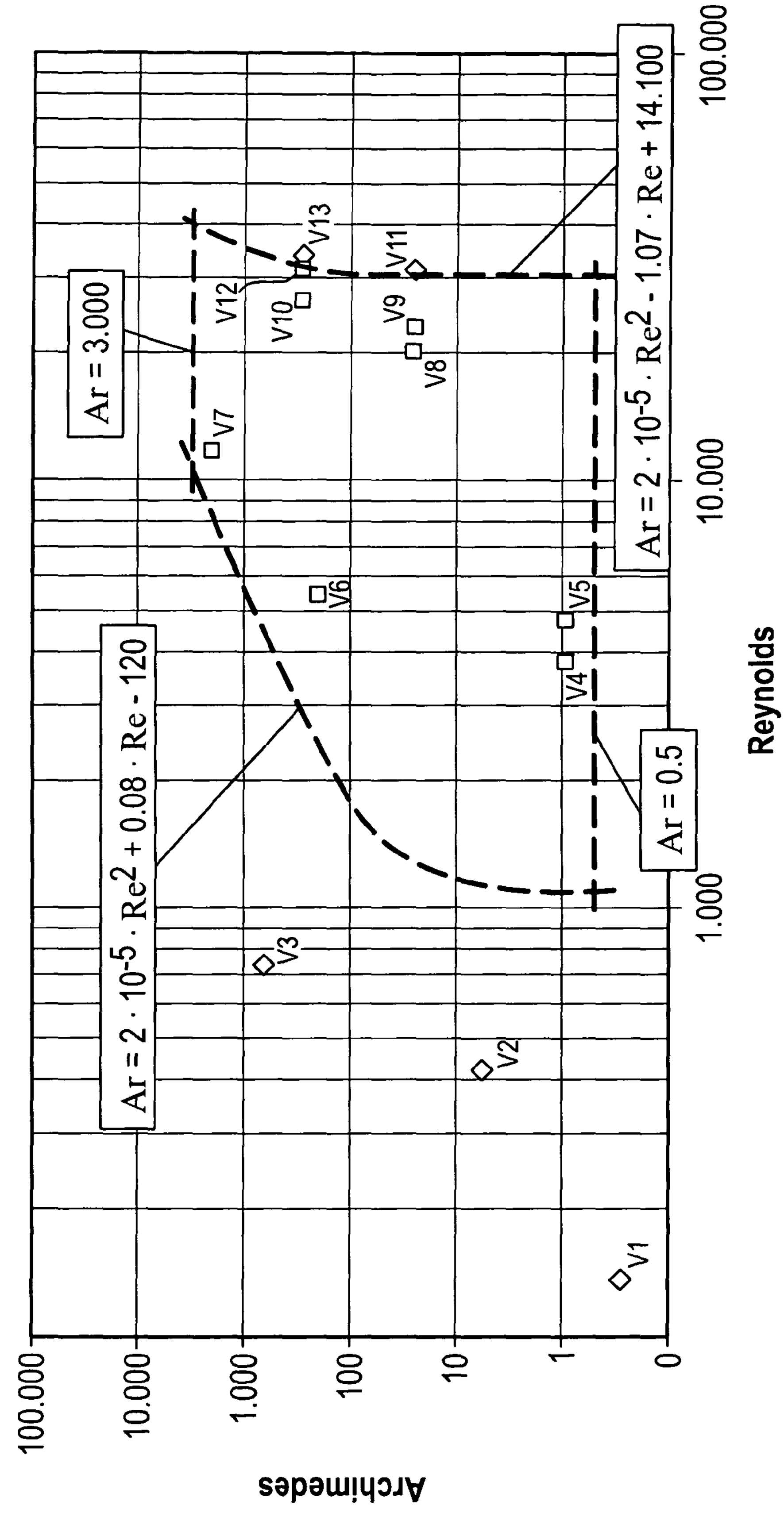
Archimedes
100.000
10.000
1.000
100
10
1
0
Reynolds
1.000
10.000
100.000
$Ar = 3.000$
$Ar = 2 \cdot 10^{-5} \cdot Re^2 + 0.08 \cdot Re - 120$
$Ar = 0.5$
$Ar = 2 \cdot 10^{-5} \cdot Re^2 - 1.07 \cdot Re + 14.100$
V1
V2
V3
V4
V5
V6
V7
V8
V9
V10
V11
V12
V13

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2704975 A


### In der Beschreibung aufgeführte Nicht-Patentliteratur


- **KUZ'MIN N G et al.** STUDY OF HEAT TRANSFER IN A FLUIDIZED BED OF SILICON-COPPER ALLOY IN A MODEL OF AN INDUSTRIAL REACTOR FOR THE SYNTHESIS OF ORGANOCHLOROSILANES. *SOVIET CHEMICAL INDUSTRY, MCELROY,* 01. Januar 1982, vol. 14 (5), 595-601